# EUROPEAN PATENT APPLICATION

(11) **EP 3 401 727 A1**
(43) Date of publication of application: **14.11.2018**
(21) Application number: 16820144.0
(22) Date of filing: 05.07.2016
(51) Int. Cl.: G02F 1/1335, G02F 1/13357, G02B 1/14, G09F 9/00

(54) **OPTICAL FILM, BACKLIGHT MODULE AND DISPLAY PANEL**

(30) Priority: 04.01.2016 CN 201620001421 U
(71) Applicant: BOE Technology Group Co., Ltd., Beijing 100015 (CN)
(72) Inventor: SHEN, Zhiguo, Beijing 100176 (CN); WU, Xiumin, Beijing 100176 (CN)
(74) Representative: Fritzsche, Thomas
(86) International application number: PCT/CN2016/088575
(87) International publication number: WO 2017/117941

(57) **Abstract**

A first optical film is disclosed. The first optical film is provided on at least one side thereof with at least one recessed portion that is recessed inwardly along a surface of the first optical film. Also disclosed is a second optical film for use with the first optical film. Further disclosed are a backlight module including the first optical film and the second optical film, and a display panel using the backlight module.

## Description

### TECHNICAL FIELD

The present disclosure relates to the field of display technologies, and particularly to an optical film, a backlight module and a display panel.

### BACKGROUND

An optical film is a thin and uniform dielectric film layer attached to the surface of an optical device. By reflection, transmission, refraction, polarization, etc. of the layered dielectric film layer, light can be changed as desired in its propagation path. The optical film is widely used, for example, in a backlight module of a display panel.

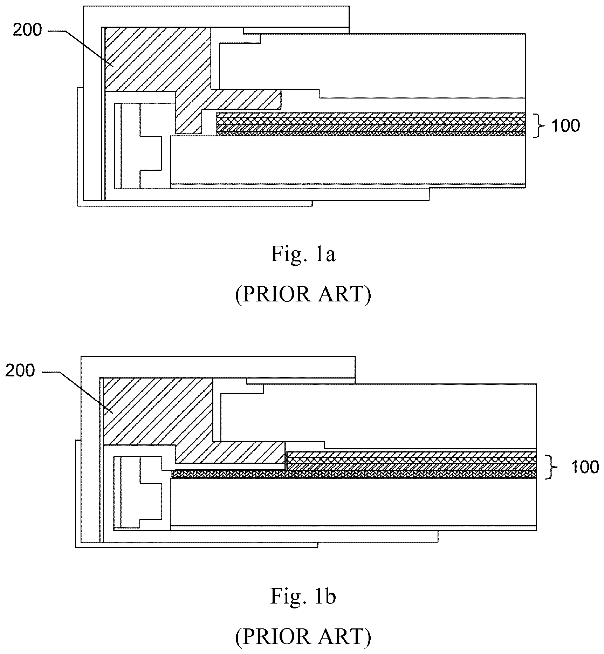

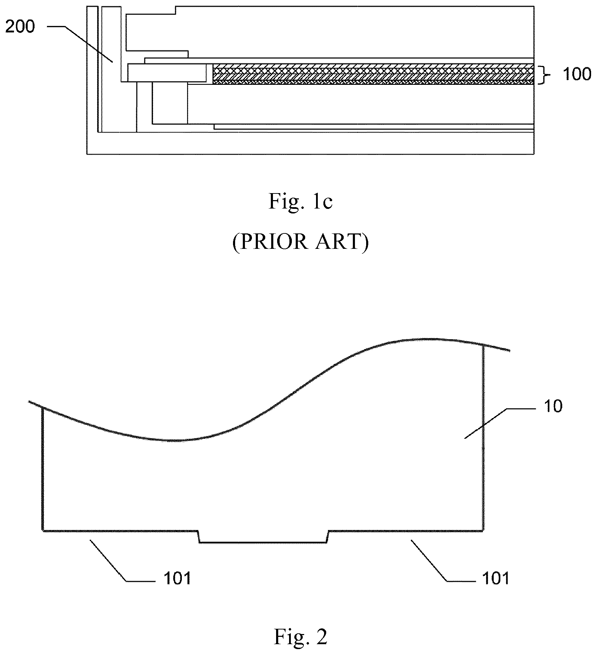

The current backlight modules have different structures in terms of the position where the optical films are placed. For example, the film can be placed below the rubber frame. Alternatively, the film may be flush with the rubber frame. The film may also be placed above the rubber frame. Figs. 1a to 1c schematically show cross-sectional views of the structures of different backlight modules in the prior art. In Fig. 1a, optical films 100 are placed below a rubber frame 200. In Fig. 1b, some of the optical films 100 are flush with the rubber frame 200, and the others are placed below the rubber frame 200. In Fig. Ic, the optical films 100 are placed above the rubber frame 200. In general, the optical films 100 are placed below the rubber frame 200 as shown in Figure 1a, so that the rubber frame 200 limits the optical films 100 in the vertical direction. This can effectively prevent frictional scratches between the optical films and the polarizer, but results in a backlight module with a thickness larger than that of the module as shown in Fig. 1b. In Fig. 1c, it may be required to use a black tape to block light leakage from the edge portions, but regularity and uniformity of the adhesion with tape are not easy to control. In addition, for narrow-frame applications, a too narrow tape may lead to poor reliability of the adhesion.

Particularly, in these prior arts, respective sides of the optical films 100 are aligned. Since the optical films are usually relatively soft, if the space (for example, a gap between the films and the rubber frame) reserved for mounting the films is small, when the upper film is being inserted, the frictional forces between the upper film and the lower film and between the upper film and the rubber frame would make the insertion of the upper film difficult.

Accordingly, there is a need for an improved optical film, backlight module and display panel.

### SUMMARY

The present disclosure is directed to solving at least one of the above technical problems. It would be advantageous to provide an optical film which, when being mounted in a space having a restricted size, may provide a clearance space to facilitate the mounting. It would also be advantageous to provide a backlight module in which the above optical film is mounted and a display panel comprising the backlight module.

According to a first aspect of the present disclosure, there is provided a first optical film. The first optical film is provided on at least one side thereof with at least one recessed portion that is recessed inwardly along a surface of the first optical film.

Correspondingly, there is further provided a second optical film for use with the first optical film. The second optical film is provided on at least one side thereof with at least one recessed portion that is recessed inwardly along a surface of the second optical film. The at least one recessed portion of the second optical film is arranged to be staggered with respect to a position on the second optical film that corresponds to the at least one recessed portion of the first optical film.

According to another aspect of the present disclosure, there is provided a backlight module comprising the first optical film as described above and the second optical film as described above. The first optical film and the second optical film are arranged in a light exit direction of the backlight module and are stacked on top of each other.

In some embodiments, the backlight module further comprises a support plate comprising a side plate arranged along a thickness direction of the backlight module and a holder extending from the side plate along surfaces of the first optical film and the second optical film. At least a part of the holder is parallel to the surfaces of the first optical film and the second optical film.

In some embodiments, the holder has an end forming a flange. At least a part of the flange is projected on the optical films that are stacked on top of each other along a direction opposite to the light exit direction to provide a restriction to the optical films in the thickness direction.

In some embodiments, the flange has a thickness ranging from 0.25 to 0.4 mm.

In some embodiments, the backlight module further comprises a positioning frame that cooperates with the holder of the support plate. The positioning frame is supported at least partially by the holder and comprises a flange extending along the surfaces of the first optical film and the second optical film. At least a part of the flange is projected on the optical films that are stacked on top of each other along a direction opposite to the light exit direction to provide a restriction to the optical films in the thickness direction.

In some embodiments, the flange has a thickness ranging from 0.25 to 0.4 mm.

In some embodiments, the first optical film and the second optical film are each provided on only one side thereof with the at least one recessed portion. The flange is arranged only at a portion of the positioning frame that corresponds to the one side.

According to a further aspect of the present disclosure, there is provided a display panel, comprising the backlight module as described above.

These and other aspects of the present disclosure will be apparent from and elucidated with reference to the embodiment(s) described hereinafter.

### BRIEF DESCRIPTION OF THE DRAWINGS

Figs. 1a to 1c schematically illustrate cross-sectional views of the structures of different backlight modules in the prior art;
Fig. 2 schematically illustrates a top view of the structure of a first optical film according to an embodiment of the present disclosure;
Fig. 3 schematically illustrates a top view of the structure of a second optical film according to an embodiment of the present disclosure;
Fig. 4 schematically illustrates a top view of a first optical film and a second optical film in a state where they are stacked on top of each other;
Fig. 5 schematically illustrates a cross-sectional view of a display panel comprising a backlight module according to an embodiment of the present disclosure, in which a relative arrangement of the optical film and the support plate of the backlight module is shown;
Fig. 6a schematically illustrates a top view of a backlight module comprising a positioning frame according to an embodiment of the present disclosure;
Fig. 6b schematically illustrates a cross-sectional view of the backlight module shown in Fig. 6a taken along a line A-A, in which the positioning frame is highlighted with hatching;
Fig. 7 schematically illustrates a cross-sectional view of a display panel comprising a backlight module according to an embodiment of the present disclosure, in which a relative arrangement of the optical film, the support plate and the positioning frame is shown; and
Fig. 8 schematically illustrates a cross-sectional view of a display panel according to an embodiment of the present disclosure, in which another relative arrangement of the optical film, the support plate and the positioning frame is shown.

It should be noted that these figures are for illustrative purposes and are not drawn to scale. Particularly, some dimensions are exaggerated for clarity.

### DETAILED DESCRIPTION

Embodiments of the present disclosure will be described in detail below with reference to the drawings.

Fig. 2 schematically illustrates a top view of the structure of a first optical film 10 according to an embodiment of the present disclosure. As shown in the figure, the first optical film 10 is provided on at least one side thereof with at least one recessed portion 101 recessed inwardly along the surface of the first optical film 10. In the illustrated embodiment, the first optical film 10 includes two recessed portions 101 at one side thereof (the lower side in Fig. 1).

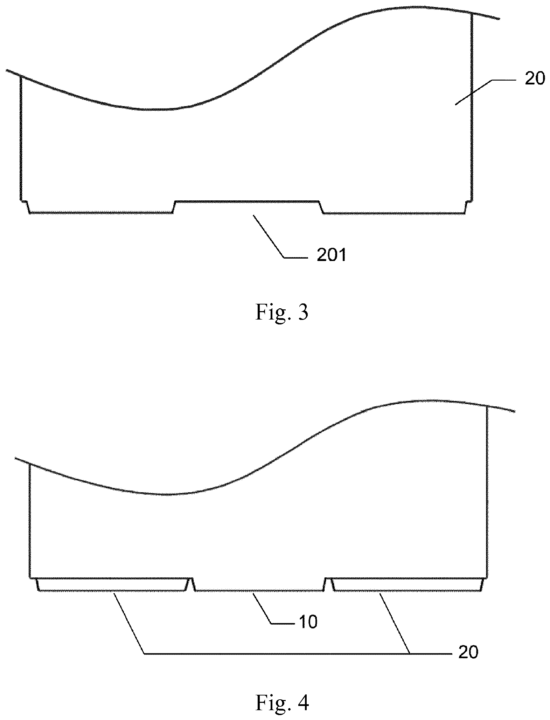

Fig. 3 schematically illustrates a top view of the structure of a second optical film 20 according to an embodiment of the present disclosure. As shown in the figure, the second optical film 20 is provided on at least one side thereof with at least one recessed portion 201 recessed inwardly along the surface of the second optical film 20. In the illustrated embodiment, the second optical film 20 includes one recessed portion 201 at one side thereof (the lower side in Fig. 2). The second optical film 20 may be used with the first optical film 10. In particular, at least one recessed portion 201 of the second optical film 20 is arranged to be staggered with respect to a position(s) on the second optical film 20 that correspond(s) to the at least one recessed portion 101 of the first optical film 10. In this way, when the first optical film 10 and the second optical film 20 are being mounted (e.g. inserted) into spaces having a restricted size, the recessed portions 101, 201 may provide a clearance space at a respective side to facilitate the mounting of the optical films. Note that the second optical film 20 is illustrated in the example of Fig. 3 as further having two additional recesses at two ends of its lower side. Such additional recesses however are not necessary.

Fig. 4 schematically illustrates a top view of the first optical film 10 and the second optical film 20 in a state where they are stacked on top of each other. After the first optical film 10 and the second optical film 20 are mounted (e.g. inserted) at predetermined mounting positions, they are stacked on top of each other. At that time, as shown in Fig. 4, the recessed portion 101 of the first optical film 10 and the recessed portion 201 of the second optical film 20 are staggered with respect to each other. In applications where the mounting space is limited (e.g. a backlight module as discussed below), providing the recessed portions 101, 201 at the sides of the optical films 10, 20 can facilitate insertion of the optical films into the restricted space. For example, where the second optical film 20 has been inserted, since the recessed portion 201 of the second optical film 20 provides a clearance space at a respective side, it would become easier to insert the first optical film 10 as the last to-be-inserted film into the restricted space.

Although the first optical film 10 is illustrated in the example of Fig. 4 as being stacked on top of the second optical film 20 as the last to-be-inserted film, other alternatives are also possible. For example, the second optical film 20 may be inserted before the first optical film 10 is inserted, so that the second optical film 20 is stacked on top of the first optical film 10.

In addition, it is to be understood that the shape, size and number of the recessed portions 101, 201 of the first optical film 10 and the second optical film 20 are not limited to those as illustrated. In some embodiments, the first optical film 10 may include multiple saw-toothed recessed portions 101, and the second optical film 20 may include multiple corresponding saw-toothed recessed portions 201, such that when the two optical films are stacked on top of each other, the multiple recessed portions 101 and the multiple recessed portions 201 are staggered from each other. In the foregoing embodiments, both the first optical film 10 and the second optical film 20 are illustrated as including a recessed portion at only one side. However, the present disclosure is not limited thereto. In another embodiment, the first optical film 10 and the second optical film 20 may include a recessed portion at both opposite sides thereof. This is advantageous to improvement of the mounting efficiency because the two sides of the optical film in this case are interchangeable so that the operator does not need to determine on which side of the optical film the recessed portion is present. In other embodiments, the first optical film 10 and the second optical film 20 may include a recessed portion at either three or even all four sides thereof (e.g. for a quadrilateral optical film).

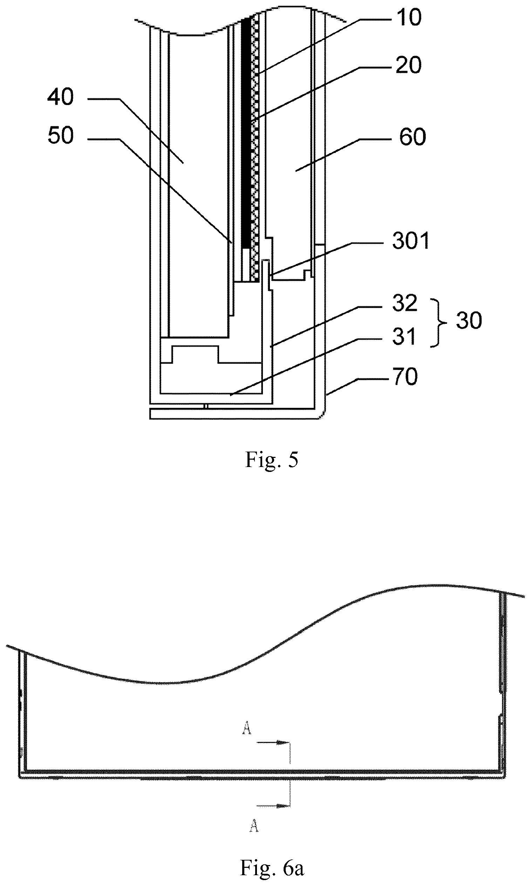

Fig. 5 schematically illustrates a cross-sectional view of a display panel comprising a backlight module according to an embodiment of the present disclosure, in which a relative arrangement of the optical film and the support plate of the backlight module is shown. In the following description, the directional term "on" is used with respect to the light exit direction of the backlight module. That is, "A is on B" means that A is located downstream of B in the light exit direction.

As shown in the figure, the backlight module comprises a first optical film 10 (indicated by grid lines in the figure) and a second optical film 20 (indicated by black filling in the figure) which are arranged in the light exit direction of the backlight module and stacked on each other. The first optical film 10 is illustrated as being stacked on the second optical film 20. The first optical film 10 and the second optical film 20 may be arranged on a light guide plate 40 of the backlight module. Generally, one or more underlying optical films 50 may be further arranged between the light guide plate 40 and the first optical film 10 and the second optical film 20. The backlight module may further comprise a light source (not shown). The relative arrangement of the light source, the light guide plate and the optical film is known in the art and will not be described in detail herein.

The backlight module further comprises a support plate 30. The support plate 30 comprises a side plate 31 arranged along a thickness direction of the backlight module and a holder 32 extending from the side plate 31 along the surfaces of the first optical film 10 and the second optical film 20. At least a part of the holder 32 is parallel to the surfaces of the first optical film 10 and the second optical film 20. In this embodiment, a flange 301 is formed at an end of the holder 32. In particular, at least a part of the flange 301 is projected on the optical films that are stacked on top of each other along a direction opposite to the light exit direction to provide a restriction on the first optical film 10 and the second optical film 20 in the thickness direction. Therefore, in this embodiment, it is possible to use the holder 32 only to provide a restriction on the first optical film 10 and the second optical film 20 (and possibly the underlying optical films) without the need for other positioning components (e.g. a rubber frame). The flange 301 can serve to shield light so as to prevent light leakage at edges of the display panel. In order to reduce the thickness of the display panel, in some embodiments, the flange 301 may have a thickness ranging from 0.25 mm to 0.4 mm. Further, the flange 301 can borrow space from a polarizer (indicated by a step on the surface of a display substrate 60 facing the first optical film 10) arranged on the display substrate 60 in the thickness direction. In this way, the distance between the uppermost optical film (the first optical film 10 in Fig. 5) and the polarizer can be between 0.05 mm and 0.3 mm, thereby achieving a light and thin design and avoiding scratches resulting from the friction between the upper film and the polarizer.

Note that the support plate 30 is illustrated in the example of Figure 5 as also forming a back plate of the backlight module; however, this is not necessary. Furthermore, the display panel shown in Fig. 5 further comprises a display substrate 60, an encapsulation component 70 for encapsulating the backlight module and the display substrate, and so on, which are known in the art and will not be described in detail herein. In particular, the display substrate 60 may further comprise a polarizer that is opposite to the optical films arranged on the light guide plate 40.

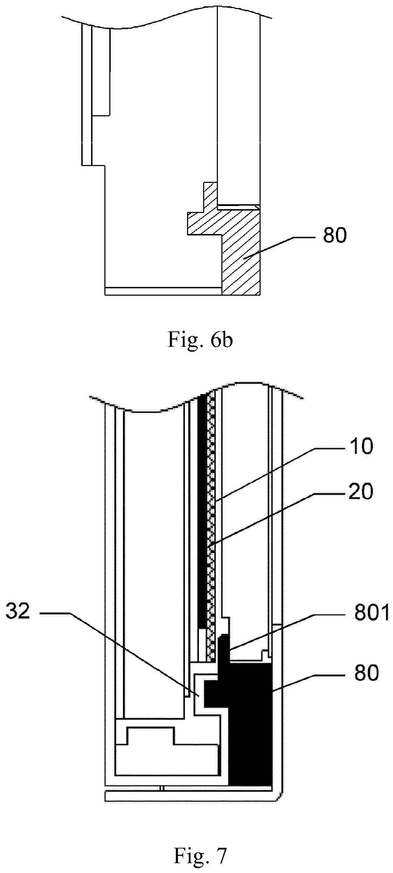

Fig. 6a schematically illustrates a top view of a backlight module comprising a positioning frame according to an embodiment of the present disclosure. Fig. 6b schematically illustrates a cross-sectional view of the backlight module shown in Fig. 6a which is taken along a line A-A. For clarity, the positioning frame 80 is highlighted with hatching in Fig. 6b. Unlike the embodiment as shown in Fig. 5, the backlight module as shown in Figs. 6a and 6b employs the positioning frame 80 instead of the holder 32 (specifically, the flange 301) to provide a restriction on the optical films in the thickness direction. Similar to the rubber frame used in the prior art, in this embodiment, the positioning frame 80 can be made of a rubber material or the like.

Fig. 7 schematically illustrates a cross-sectional view of a display panel comprising a backlight module according to an embodiment of the present disclosure, in which a relative arrangement of the optical films 10, 20, the support plate (specifically, the holder 32), and the positioning frame 80 is shown. As shown in the figure, in this embodiment, the positioning frame 80 and the holder 32 cooperate with each other. Specifically, the positioning frame 80 can be supported at least partially by the holder 32 and comprise a flange 801 extending along the surfaces of the first optical film 10 and the second optical film 20. At least a part of the flange 801 is projected on the optical films that are stacked on top of each other along a direction opposite to the light exit direction to provide a restriction on the first optical film 10 and the second optical film 20 in the thickness direction. Similar to the foregoing embodiments, the flange 801 may have a thickness ranging from 0.25 mm to 0.4 mm, thereby achieving a light and thin design.

In this embodiment, the first optical film 10 and the second optical film 20 may each be provided with at least one recessed portion 101, 201 at only one side, and the flange 801 is arranged only at a portion of the positioning frame 80 corresponding to the one side. As described above, the flange 801 provides a restriction on the optical films in the thickness direction. At that time, the fixation of the positioning frame 80 and the optical films may be effected in the same manner as in the prior art, for example, using a tape, at the other three sides of the positioning frame 80 where no flange is arranged. In some embodiments, the fixation of the positioning frame 80 and the optical film may be effected in a manner as shown in Fig. 1c at the other three sides of the positioning frame 80 where no flange is arranged, such that the optical films are generally placed above the positioning frame 80. This can further reduce the thickness as compared to the manner in which the positioning frame 80 presses the optical films at each side.

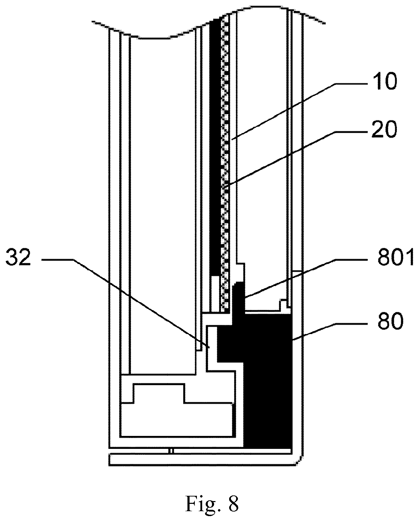

Fig. 8 schematically illustrates a cross-sectional view of a display panel according to an embodiment of the present disclosure, in which another relative arrangement of the optical films 10, 20, the support plate (specifically, the holder 32), and the positioning frame 80 is shown. This embodiment is different from the embodiment as shown in Fig. 7 in that the portion of the support plate 30 that is close to the optical films extends along the direction of the surface of the optical films without an additional structure extending along a direction perpendicular to the surface. In this case, the holder 32 can still support the positioning frame 80. This can reduce processing steps for making the support plate, which contributes to improvement of the production efficiency and reduction in the cost. It is to be understood that the shape and structure of the holder 32 and the cooperation (fixation) between the holder 32 and the positioning frame 80 are not the focus of the present disclosure, and that the cooperating relationships as shown in Figs. 7 and 8 are merely illustrative. The present disclosure is not limited thereto.

Various modifications, adaptations to the foregoing exemplary embodiments of this disclosure may become apparent to those skilled in the relevant arts in view of the foregoing description, when read in conjunction with the accompanying drawings. Any and all modifications will still fall within the scope of the non-limiting and exemplary embodiments of this disclosure. Furthermore, other embodiments of the disclosure set forth herein will come to mind to one skilled in the art to which these embodiments of the disclosure pertain having the benefit of the teachings presented in the foregoing descriptions and the associated drawings.

Therefore, it is to be understood that the embodiments of the disclosure are not to be limited to the specific embodiments disclosed and that modifications and other embodiments are intended to be included within the scope of the appended claims. Although specific terms are used herein, they are used in a generic and descriptive sense only and not for purposes of limitation.

## Claims

1. A first optical film, the first optical film being provided on at least one side thereof with at least one recessed portion that is recessed inwardly along a surface of the first optical film.

2. A second optical film for use with the first optical film according to claim 1, the second optical film being provided on at least one side thereof with at least one recessed portion that is recessed inwardly along a surface of the second optical film, wherein the at least one recessed portion of the second optical film is arranged to be staggered with respect to a position on the second optical film that corresponds to the at least one recessed portion of the first optical film.

3. A backlight module, comprising: the first optical film according to claim 1 and the second optical film according to claim 2, wherein the first optical film and the second optical film are arranged in a light exit direction of the backlight module and are stacked on top of each other.

4. The backlight module according to claim 3, further comprising a support plate comprising a side plate arranged along a thickness direction of the backlight module and a holder extending from the side plate along surfaces of the first optical film and the second optical film, at least a part of the holder being parallel to the surfaces of the first optical film and the second optical film.

5. The backlight module according to claim 4, wherein the holder has an end forming a flange, at least a part of the flange being projected on the optical films that are stacked on top of each other along a direction opposite to the light exit direction to provide a restriction to the optical films in the thickness direction.

6. The backlight module according to claim 5, wherein the flange has a thickness ranging from 0.25 mm to 0.4 mm.

7. The backlight module according to claim 4, further comprising a positioning frame that cooperates with the holder of the support plate, wherein the positioning frame is supported at least partially by the holder and comprises a flange extending along the surfaces of the first optical film and the second optical film, at least a part of the flange being projected on the optical films that are stacked on top of each other along a direction opposite to the light exit direction to provide a restriction to the optical films in the thickness direction.

8. The backlight module according to claim 7, wherein the flange has a thickness ranging from 0.25 mm to 0.4 mm.

9. The backlight module according to claim 7, wherein the first optical film and the second optical film are each provided on only one side thereof with the at least one recessed portion, and wherein the flange is arranged only at a portion of the positioning frame that corresponds to the one side.

10. A display panel, comprising the backlight module according to any one of claims 3 to 9.
